# EUROPÄISCHE PATENTSCHRIFT

(11) **EP 1 159 521 B1**
(45) Veröffentlichungstag und Bekanntmachung des Hinweises auf die Patenterteilung: **26.03.2003**
(21) Anmeldenummer: 00901544.7
(22) Anmeldetag: 13.01.2000
(51) Int. Cl.: F02D 13/02, F02B 75/02

(54) **VERFAHREN ZUM BETRIEB EINER BRENNKRAFTMASCHINE MIT VARIABLEN GASWECHSELSTEUERZEITEN**
METHOD FOR OPERATING AN INTERNAL COMBUSTION ENGINE WITH VARIABLE CHARGE CHANGING CONTROL TIMES
PROCEDE POUR FAIRE FONCTIONNER UN MOTEUR A COMBUSTION INTERNE A TEMPS DE COMMANDE VARIABLES D'ECHANGE DES GAZ

(30) Priorität: 10.02.1999 DE 19905364
(43) Veröffentlichungstag der Anmeldung: 05.12.2001
(73) Patentinhaber: DaimlerChrysler AG, 70567 Stuttgart (DE)
(72) Erfinder: ENDERLE, Christian, D-73666 Baltmannsweiler (DE); FRIESS, Walter, D-70597 Stuttgart (DE); GANSER, Jürgen, D-73728 Esslingen (DE); LETSCHE, Ulrich, D-70565 Stuttgart (DE)
(86) Internationale Anmeldenummer: EP0000205
(87) Internationale Veröffentlichungsnummer: WO00047882

(56) Entgegenhaltungen:
- EP-A- 0 761 950
- EP-A- 0 863 301
- DE-A- 3 317 128
- DE-A- 19 631 799
- US-A- 5 293 741

## Beschreibung

Die Erfindung bezieht sich auf ein Verfahren zum Betrieb einer Brennkraftmaschine mit variablen Gaswechselsteuerzeiten, speziell zum schnellen Erreichen der Betriebstemperatur beim Kaltstart, zur temporär verstärkten Heißgaserzeugung und/oder zur Realisierung eines Mehrtaktbetriebs mit erhöhter Taktzahl pro Arbeitsspiel, letzteres insbesondere zur Aufteilung des Verbrennungsprozesses auf mehrere Arbeitstakte eines Arbeitsspiels. Unter dem Begriff Gaswechselsteuerzeiten werden hierbei die Steuerzeiten der zusammenfassend als Gaswechselventile bezeichneten Ein- und Auslaßventile des oder der Brennräume der Brennkraftmaschine verstanden.

Durch die Entwicklung frei ansteuerbarer Gaswechselventile, d.h. von Ein- und Auslaßventilen, die zu variabel vorgebbaren Zeitpunkten während der verschiedenen Arbeitstakte eines jeweiligen Arbeitsspiels in ihre Offen- bzw. Geschlossenstellung gesteuert werden können, siehe z.B. die Patentschrift DE 195 01 495 C1, ist es möglich geworden, zur Erzielung bestimmter, gewünschter Effekte unkonventionelle Gaswechselsteuerzeiten einzustellen, die sich von denen unterscheiden, die üblicherweise beim herkömmlichen Zweitakt- oder Viertaktbetrieb angewendet werden.

Ein Problem, das mit dieser Technik variabler Gaswechselsteuerzeiten angegangen werden kann, ist die möglichst schnelle Erreichung der Betriebstemperatur bei einem Kaltstart, um die Abgasemissionen während der Warmlaufphase möglichst gering zu halten und/oder für die Anwendung beim Fahrzeugmotor eine ausreichende Wärmemenge für eine Fahrzeugheizung zur Verfügung stellen zu können. Dazu wird von dem Gedanken ausgegangen, bei kalter Brennkraftmaschine die im Kraftstoff enthaltene Energie nicht kompromisslos optimal in Antriebsenergie umzusetzen, sondern in gewissen Zeiträumen, wie nach einem Kaltstart, bewußt auch zur Wärmeerzeugung einzusetzen, um entsprechende Zusatzeinrichtungen, wie Standheizgeräte, überflüssig zu machen. Dies sollte selbstverständlich mit möglichst geringen Abgasemissionen einhergehen.

Ein weiterer Wunsch beim Betrieb mancher Brennkraftmaschinen besteht in einer zeitweise verstärkten Heißgaserzeugung, z.B. für die Turbine eines angekoppelten Abgasturboladers. Beim letztgenannten Anwendungsfall besteht z.B. Interesse an einer Verbesserung des als sogenanntes "Turboloch" bezeichneten, im Vergleich zu Saugmotoren relativ schlechten Instationärverhaltens von Turbomotoren, d.h. Motoren mit Abgasturbolader, beim Übergang vom Teillast- zum Vollastbetrieb.

In der Patentschrift DE 1 034 925 ist ein Verfahren zum Betrieb einer Kolbenbrennkraftmaschine mit Abgasturbine beschrieben, bei dem die Einstellung variabler Gaswechselsteuerzeiten durch eine Verstellsteuerung ermöglicht wird, die durch Betätigung eines zugehörigen Hebels eine Veränderung der Winkelstellung einer Nockenwelle relativ zu einer Kurbelwelle erlaubt. Wenn ausgehend von einem momentanen Betriebszustand die von der Brennkraftmaschine an einer Abtriebswelle bereitgestellte Antriebsleistung vermindert werden soll, wird mittels der Verstellsteuerung eine Frühverstellung der Auslaßventile vorgenommen, um der Abgasturbine weiterhin im wesentlichen dieselbe Energie zuzuführen, so daß sie in einem Betriebsbereich mit gutem Wirkungsgrad gehalten werden kann. Die Abgasturbine kann bei dieser Brennkraftmaschine mechanisch an deren z.B. zum Antrieb eines Kraftfahrzeuges dienende Abtriebswelle angekoppelt sein oder zusammen mit einem entsprechenden Laderteil einen Abgasturbolader bilden. In beiden Fällen kann speziell im niedrigen Drehzahlbereich vorgesehen sein, durch Frühverstellung der Auslaßventile der Abgasturbine viel Energie zuzuführen, so dass diese ein verhältnismäßig hohes Drehmoment erzeugen kann.

Zur Erzielung eines kraftstoffverbrauchsgünstigen Teillastbetriebes ist die Technik der sogenannten Zylinderabschaltung oder -ausblendung bekannt, bei der in einem vorgebbaren Teil der aufeinanderfolgenden Arbeitsspiele gezielt ein Teil der mehreren Brennräume einer Mehrzylinder-Brennkraftmaschine dadurch "ausgeschaltet" bzw. "ausgeblendet" werden, dass entgegen dem Normalbetrieb keine Kraftstoffeinspritzung erfolgt, so dass die abgeschalteten Zylinder lediglich passiv "mitlaufen". Dies wird von geeigneten Ansteuerungsmaßnahmen für die Gaswechselventile begleitet. Derartige Betriebsverfahren sind in den Offenlegungsschriften DE 44 40 920 A1 und EP 0 703 357 A2 sowie den Patentschriften DE 42 92 543 C1 und US 5.655.508 beschrieben.

Aus der Offenlegungsschrift EP 0 126 812 A1 ist es bekannt, eine Brennkraftmaschine wahlweise umschaltbar in einer Viertakt-Normalbetriebsart und einer Sechstakt-Betriebsart zu betreiben. Letztere soll in stationären Betriebszuständen den Kraftstoffverbrauch und den Schadstoffanteil im Abgas senken. In einer ersten Variante wird dazu nach einer Einlassphase, einer Kompressionsphase und einer Verbrennungs- und Expansionsphase eine zweite Kompressionsphase bei geschlossen gehaltenem Auslassventil durchgeführt, an die sich eine zweite Entspannungsphase anschließt. In letzterer wird restlicher, unverbrannter Kraftstoff verbrannt, optional unterstützt durch einen zugeordneten Zündvorgang. Erst dann wird wie üblich das Abgas während einer Gasausschiebephase aus dem Brennraum herausgedrückt. In einer zweiten Variante schließen sich an die Einlass- und die Kompressionsphase eine Entspannungs- und eine zweite Kompressionsphase an, bevor dann durch Zündung eine Verbrennungs- und Entspannungsphase und die abschließende Gasauschiebephase durchgeführt werden. In einer dritten Variante schließen sich nach der Einlass-, der Kompressions- und der Verbrennungs- und Entspannungsphase eine Gasausschiebephase und eine Lufteinlassphase an, in der nur Luft in den jeweiligen Brennraum eingeleitet wird, bevor wieder die abschließende Gasausschiebephase stattfindet. Eine vierte Variante entspricht der dritten Variante mit der Ausnahme, dass statt der Lufteinlassphase eine Abgaseinlassphase als fünfter Arbeitstakt durchgeführt wird, bei dem das zuvor ausgeschobene Abgas wieder eingesaugt wird, indem das Auslassventil offen und das Einlassventil geschlossen gehalten werden.

Der Erfindung liegt als technisches Problem die Bereitstellung eines neuartigen Betriebsverfahrens der eingangs genannten Art zugrunde, mit dem sich eine Brennkraftmaschine unter Ausnutzung der Möglichkeit zur Einstellung variabler Gaswechselsteuerzeiten relativ verbrauchsgünstig und schadstoffemissionsarm gerade auch in speziellen Betriebssituationen betreiben lässt, wie zum warmlaufen und zur verstärkten Heißgaserzeugung.

Die Erfindung löst dieses Problem durch die Bereitstellung eines Betriebsverfahrens mit den Merkmalen des Anspruchs 1. Die darin angegebenen unterschiedlichen Betriebsarten können in entsprechenden Betriebssituationen für ein und dieselbe Brennkraftmaschine vorgesehen sein, wobei die Möglichkeit ausgenutzt wird, variable Gaswechselsteuerzeiten einstellen zu können. Selbstverständlich ist es auch möglich, bei einer jeweils gegebenen Brennkraftmaschine nur eine dieser verschiedenen Betriebsarten zu realisieren, vorzugsweise in Kombination mit einer herkömmlichen Zweitakt- oder Viertakt-Betriebsart, oder eine beliebige Auswahl dieser Betriebsarten für die Brennkraftmaschine zuzulassen.

In der Abgashalte-Betriebsart wird für wenigstens einen Teil der aufeinanderfolgenden Arbeitsspiele das Auslaßventil nach einer Verbrennungs- und Expansionsphase nicht wie üblich geöffnet, sondern während einer anschließenden Kompressionsphase geschlossen gehalten und erst im Verlauf einer daran anschließenden Expansionsphase vor Beginn einer anschließenden Gasausschiebephase geöffnet. Dieses Einschieben einer zusätzlichen Kompressions- und Expansionsphase erhöht die Taktzahl des Arbeitsspiels um zwei Takte, d.h. bei einer Viertaktmaschine ergibt sich ein Sechstaktbetrieb, und hat zur Folge, daß sich das noch heiße Abgas verglichen mit dem Normalbetrieb entsprechend länger im Brennraum aufhält und daher mehr Zeit zum Wärmeübergang auf die Brennraumwände zur Verfügung steht. Auch diese Betriebsart eignet sich folglich zum schnellen Erreichen der Betriebstemperatur für die Brennkraftmaschine selbst und ggf. für eine daran angeschlossene Abgasreinigungsanlage und speziell bei Kraftfahrzeuganwendungen auch zur vermehrten Bereitstellung von Wärme für eine Fahrzeuginnenraumheizung. Auch bei dieser Abgashalte-Betriebsart wird die Energie des verbrannten Kraftstoffs nicht kompromisslos optimal in mechanische Antriebsenergie umgesetzt, sondern zur gezielten, vergleichsweise verbrauchsgünstigen und schadstoffemissionsarmen Bereitstellung von Abgaswärme genutzt.

In der Abgasfüllungs-Betriebsart wird für wenigstens einen Teil der aufeinanderfolgenden Arbeitsspiele das Auslaßventil am Ende einer Gasausschiebephase nicht geschlossen, sondern über die anschließende Gasansaugphase hinweg geöffnet gehalten, und gleichzeitig bleibt das Einlaßventil auch in der Gasansaugphase geschlossen. Der Brennraum wird dadurch in dieser Gasansaugphase ausschließlich mit Abgas gefüllt. Anschließend wird eine Kompressions- und Expansionsphase mit geschlossen gehaltenen Gaswechselventilen und deaktiviert bleibender Zündung und Kraftstoffeinspritzung eingeschoben. Die in diesem Zeitraum für dieses Mitlaufen des Zylinders erforderliche Energie muß anderweitig aufgebracht werden, z.B. von anderen, im selben Zeitraum mit höherer Last als üblich befeuerten Zylindern. In diesem Fall kann in diesen, mit höherer Last betriebenen Zylindern ein erhöhter Wandwärmeübergang stattfinden. Die in der Kompressionsphase bei der Abgasverdichtung entstehende Kompressionsenergie kann zum Teil an die Brennraumwand abgegeben und zum Teil in Gasdruck umgesetzt werden. Auch hier kann durch frühes Öffnen des Auslaßventils noch während der Expansionsphase ein Teil des Gasdrucks in erhöhte Abgaswärme statt in mechanische Antriebsarbeit ungesetzt werden. Somit eignet sich auch diese Abgasfüllungs-Betriebsart zur effektiven Wärmebereitstellung speziell auch beim Warmlaufen der Brennkraftmaschine.

In der Zusatztakt-Betriebsart wird der Verbrennungsprozeß auf mehrere Takte eines entsprechenden Arbeitsspiels aufgeteilt und/oder ein zusätzlicher Abgasreinigungs-Arbeitstakt eingeschoben, wozu das Arbeitsspiel entsprechende zusätzliche Arbeitstakte enthält. Dies bedeutet, daß zwischen zwei Gasansaugphasen mit voll geoffnetem Einlaßventil z.B. zwei Verbrennungs- und Expansionsphasen mit vorangehender Kompressionsphase vorgesehen sein können, in denen die Gaswechselventile jeweils geschlossen bleiben und das im Brennraum befindliche Gemisch gezündet wird. Je nach Bedarf kann eine individuelle Kraftstoffeinspritzung in den Brennraum für jede diese Verbrennungs- und Expansionsphasen vorgenommen werden. Insbesondere können zwei direkt aufeinanderfolgende Verbrennungs- und Expensionsphasen mit jeweils zugehöriger Kompressionsphase innerhalb eines Arbeitsspiels vorgesehen sein. Als weitere Möglichkeit kann in einem zusätzlichen Arbeitstakt eine Abgasreinigungsmaßnahme vorgesehen werden, z.B. die Zugabe eines stickoxidreduzierenden Reduktionsmittels.

Ein nach Anspruch 2 weitergebildetes Verfahren beinhaltet speziell eine Abgasdirektrückführungs-Betriebsart, bei der eine Spätverstellung des oder der Auslaßventile vorgenommen wird, d.h. das Auslaßventil wird gegenüber dem Normalbetrieb, in welchem es nur während einer Gasausschiebephase geöffnet wird, verspätet erst während einer an die Gasausschiebephase anschließenden Gasansaugphase geschlossen. Dies kann, wie auch in allen anderen erfindungsgemäßen Betriebsarten, in jedem Arbeitsspiel oder nur für einen wählbaren Teil der aufeinanderfolgenden Arbeitsspiele eines oder mehrerer auswählbarer Brennräume erfolgen, d.h. die betreffende Betriebsart kann nach einem vorgebbaren Brennraum- und/oder Arbeitsspielmuster individuell für jeden Brennraum und jedes Arbeitsspiel eingestellt werden. Als Folge hiervon wird ein Teil des zuvor ausgeschobenen, heißen Abgases wieder direkt in den Brennraum zurückgesaugt. Der heiße Abgasanteil erwärmt die anschließend über das Einlaßventil zugeführte Frischluftmenge, so daß sich insgesamt die Wärmeabgabe an die Brennraumwände erhöht. Diese Betriebsart eignet sich daher speziell beispielsweise zum schnelleren Erreichen der Betriebstemperatur bei einem Kaltstart.

Bei einer Weiterbildung dieser Abgasdirektrückführungs-Betriebsart wird gemäß Anspruch 3 das jeweilige Einlaßventil um etwa dieselbe Verzögerungszeit wie das Auslaßventil gegenüber dem Normalbetrieb verspätet geöffnet, d.h. der Öffnungsvorgang für das Einlaßventil wechselt sich dann wie üblich mit dem SchließVorgang für das Auslaßventil ab. Dies vermeidet einen merklichen Gasaustausch zwischen Ansaugtrakt und Abgastrakt.

In einer weiteren Ausgestaltung der Abgasdirektrückführungs-Betriebsart ist nach Anspruch 4 zusätzlich eine Frühverstellung des Auslaßventils vorgesehen, d.h. das Auslaßventil wird nicht nur später als normal geschlossen, sondern zudem früher als normal geöffnet, d.h. schon vor Beginn der Gasausschiebephase während einer vorhergehenden Verbrennungs- and Expansionsphase. Dies bewirkt, daß sich heißes, noch unter Druck stehendes Abgas in den Auslaßtrakt entspannt, so daß weniger Energie in mechanische Arbeit umgewandelt wird und daher zusätzliche Abgaswärme anfällt, die zum schnelleren Erreichen der Betriebstemperatur genutzt werden kann. Durch das frühe Öffnen des Auslaßventils kann zudem bei Bedarf ein noch relativ energie- bzw. enthalpiereiches Heißgas bereitgestellt werden, um an einem nachgeschalteten Entspannungsprozeß, z.B. an einer Abgasturbine eines Turboladers, eine erhöhte Leistungsabgabe zu bewirken.

Vorteilhafte Ausführungsbeispiele der Erfindung sind in den Zeichnungen dargestellt und werden nachfolgend beschrieben. Hierbei zeigen:
- Fig. 1: ein Ventilhub/Kolbenhub-Arbeitsspieldiagramm zur Veranschaulichung einer Normalbetriebsart einer Viertakt-Kolbenbrennkraftmaschine,
- Fig. 2: ein Diagramm entsprechend Fig. 1, jedoch für den Beispielfall einer Abgasdirektrückführungs-Betriebsart,
- Fig. 3: ein Diagramm entsprechend Fig. 1, jedoch für den Beispielsfall einer Abgashalte-Betriebsart,
- Fig. 4: ein Diagramm entsprechend Fig. 1, jedoch für den Beispielsfall einer Abgasfüllungs-Betriebsart und
- Fig. 5: ein Diagramm entsprechend Fig. 1, jedoch für den Beispielsfall einer Zusatztakt-Betriebsart.

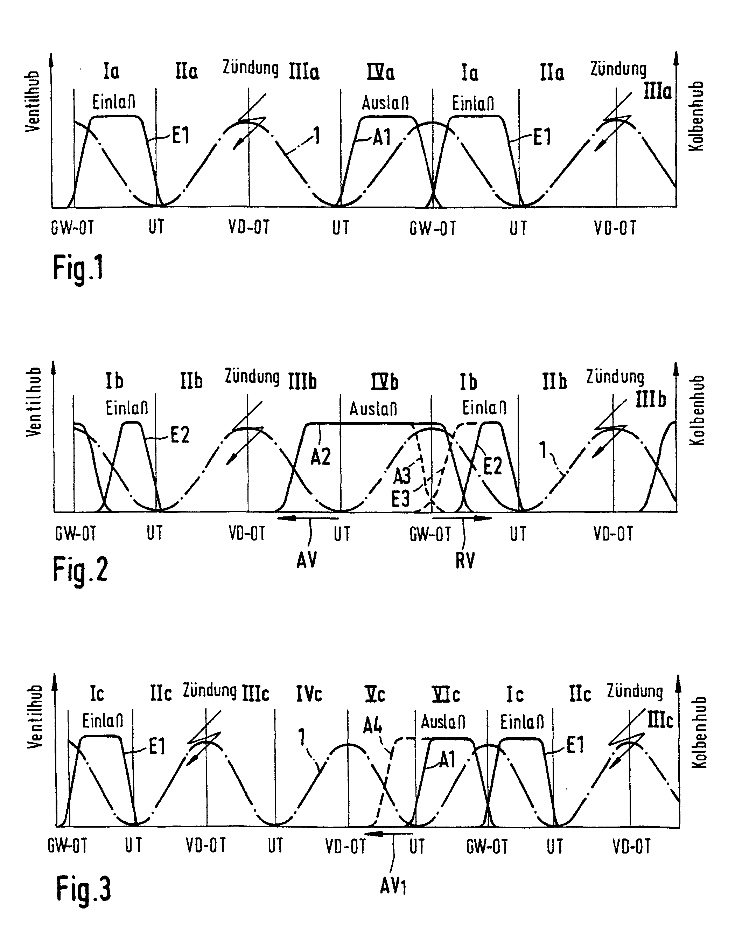

In den Fig. 1 bis 5 sind verschiedene Betriebsarten einer Viertakt-Kolbenbrennkraftmaschine in Form eines jeweiligen Diagramms illustriert, das für einen Brennraum den Verlauf des Hubs der Gaswechselventile, d.h. des Einlaß- und des Auslaßventils, und den Kolbenhub jeweils in Abhängigkeit vom Kurbelwellenwinkel für ein Arbeitsspiel qualitativ wiedergibt. Dabei stellt die strichpunktierte Kennlinie 1 jeweils den Hubverlauf des Kolbens dar, der sich wie üblich zwischen einem unteren Totpunkt UT und einem oberen Totpunkt OT bewegt. Entsprechend dem Viertaktbtrieb unterscheidet sich die Situation am oberen Totpunkt OT danach, ob gerade ein Gaswechsel stattfindet, in den Diagrammen als GW-OT bezeichnet, oder eine Verdichtung, in den Diagrammen mit VD-OT bezeichnet. In den Diagrammen sind der Einfachkeit halber die Kolbenhubpositionen der unteren Totpunkte UT und der oberen Totpunkte GW-OT, VD-OT mit den entsprechenden Kurbelwinkelwerten auf der Abszisse gleichgesetzt. Der Ventilhub ist in den Diagrammen gemäß der linken Ordinate im Sinne zunehmender Öffnung abgetragen, d.h. der Ventilhubwert auf Abszissenhöhe entspricht einem geschlossenen Ventil, während der obere Plateauwert der verschiedenen Gaswechselventilkennlinien die volle Offenstellung des betreffenden Ventils repräsentiert.

Fig. 1 veranschaulicht die normale, übliche Viertakt-Betriebsart. In einem ersten Arbeitstakt Ia, der eine Gasansaugphase bildet, in der sich der Kolben vom oberen Gaswechsel-Totpunkt GW-OT zum unteren Totpunkt UT bewegt, wird das Einlaßventil geöffnet, wie durch eine zugehörige Kennlinie E1 repräsentiert. Das Auslaßventil ist währenddessen geschlossen. Ein anschließender zweiter Arbeitstakt IIa bildet eine Kompressionsphase, in welcher sich der Kolben vom unteren Totpunkt UT zum oberen Verdichtungs-Totpunkt VD-OT bewegt und die Gaswechselventile geschlossen bleiben. Daran schließt sich als dritter Arbeitstakt IIIa eine Verbrennungs- und Expansionsphase an, in welcher sich der Kolben vom oberen Verdichtungs-Totpunkt VD-OT zum unteren Totpunkt UT bewegt und die Zündung des im Brennraum gebildeten Luft/Kraftstoff-Gemischs sowie die Entspannung des gebildeten Verbrennungsgases erfolgt. Der Kraftstoff kann dabei in üblicher Weise nach Einspritzung in den Ansaugtrakt mit der Frischluft in den Brennraum gelangen oder bevorzugt direkt in den Brennraum eingespritzt werden, meist im Verlauf der Kompressionsphase IIa. Der anschließende vierte Arbeitstakt IVa bildet eine Gasausschiebephase, in der bei geschlossenem Einlaßventil das Auslaßventil geöffnet wird, wie durch die zugehörige Kennlinie A1 repräsentiert, wodurch das Verbrennungsgas in den Abgastrakt ausgeschoben wird. Damit ist ein Viertakt-Arbeitsspiel abgeschlossen, an das sich das nächste Arbeitsspiel anschließt.

Im Diagramm von Fig. 2 ist eine Abgasdirektrückführungs-Betriebsart veranschaulicht, bei der ein Teil des über das Auslaßventil in den Abgasauslaßtrakt ausgeschobenen Verbrennungsgases noch im selben Arbeitsspiel direkt wieder in den Brennraum zurückgesaugt wird und außerdem durch frühes Öffnen des Auslaßventils heißes Verbrennungsgas entspannt wird. Beide Maßnahmen führen dazu, daß die mit der Kraftstoffverbrennung bereitgestellte Energie nicht optimal in mechanische Antriebsenergie umgesetzt, sondern zum Teil zur Wärmeerzeugung genützt wird, z.B. zum schnelleren Erreichen der Betriebstemperatur der Brennkraftmaschine beim Kaltstart.

Zu diesem Zweck wird in einer Kompressionsphase IIb, die unverändert derjenigen des Normalbetriebs von Fig. 1 entspricht, das im Brennraum befindliche Gemisch verdichtet, woran sich eine Verbrennungs- und Expansionsphase IIIb anschließt, während der bereits das Auslaßventil früh geöffnet wird, z.B. schon nach der Hälfte der Verbrennungs- und Expansionsphase, wie durch eine zugehörige Kennlinie A2 wiedergegeben. Durch das frühe Öffnen des Auslaßventils, noch bevor der Kolben den unteren Totpunkt UT erreicht hat, wird heißes, noch unter Druck stehendes Verbrennungsgas in den Abgasauslaßtrakt entspannt, so daß dem Kolben weniger mechanische Arbeit zugeführt wird. Die nicht mechanisch genutzte Energie fällt als zusätzliche Abgaswärme an. Das Auslaßventil bleibt während einer anschließenden Gasausschiebephase IVb geöffnet und wird erst im Verlauf einer darauf folgenden Gasansaugphase Ib geschlossen, d.h. erst um einen vorgebbaren Rücksaugverzögerungswert RV nach dem oberen Gaswechsel-Totpunkt GW-OT. Das Einlaßventil wird um vorzugsweise denselben Wert RV verspätet erst im Verlauf der Gasansaugphase Ib geöffnet, wie durch eine zugehörige Kennlinie E2 repräsentiert. Durch das späte Schießen des Auslaßventils, erst nachdem der Kolben den oberen Gaswechsel-Totpunkt GW-OT passiert hat und sich in der Saugphase befindet, wird ein Teil des soeben ausgeschobenen, noch heißen Abgases aus dem Abgasauslaßtrakt direkt wieder in den Brennraum zurückgesaugt. Dieser heiße Abgasanteil erwärmt die durch das anschließende Öffnen des Einlaßventils zugeführte Frischluftmenge, so daß die insgesamt während des Arbeitsspiels an die Brennraumwände und damit an ein dieselben kühlendes Kühlmittel abgegebene Wärme zunimmt. In Fahrzeuganwendungen hat die dadurch verkürzte Warmlaufphase der Brennkraftmaschine den wünschenswerten Effekt, daß über das Motorkühlmittel relativ rasch Wärme zur Beheizung eines Fahrzeuginnenraums zur Verfügung steht. Dies ist besonders bei modernen Motoren von Bedeutung, die so sehr auf hohen Wirkungsgrad optimiert sind, daß die für die Fahrzeugheizung zur Verfügung stehende Wärmemenge im Teillastbetrieb oft als zu gering empfunden wird. Des weiteren ist die vermehrte Erzeugung von Abgaswärme ohne gleichzeitige Erzeugung einer unnötig hohen mechanischen Antriebsleistung für den Fall einer der Brennkraftmaschine nachgeschalteten Abgasreinigungsanlage von Vorteil, da auch diese dann schneller ihre zur effektiven Schadstoffminderung erforderliche Betriebstemperatur erreicht.

Alternativ zu der in Fig. 2 gezeigten Kombination von frühem Öffnen und spätem Schließen des Auslaßventils ist es selbstverständlich möglich, nur eine diese beiden Maßnahmen vorzusehen. Die Variante eines alleinigen frühen Öffnens des Auslaßventils, das dann wie im Normalbetrieb von Fig. 1 am oberen Gaswechsel-Totpunkt GW-OT parallel zum Öffnen des Einlaßventils geschlossen wird, ist in Fig. 2 mit gestrichelten Auslaß- und Einlaßventil-Kennlinien A3, E3 veranschaulicht. In der anderen Variante wird das Auslaßventil erst wie normal in der unteren Totpunktstellung UT des Kolbens am Ende der Verbrennungs- und Expansionsphase IIIb geöffnet.

Das frühe Öffnen des Auslaßventils kann außerdem für eine zeitweise verstärkte Heißgaserzeugung in Fällen genutzt werden, in denen sich an die Brennkraftmaschine abgasseitig ein Heißgasentspannungsprozeß anschließt, z.B. in Form einer Abgasturbine eines Abgasturboladers. Bei einer kurzfristigen Leistungsanforderung an eine solche Heißgasentspannungsmaschine kann die Brennkraftmaschine für eine gewisse Zeitspanne durch das frühe Öffnen des Auslaßventils noch während der Verbrennungs- und Expansionsphase IIIb auf Kosten der mechanischen Energielieferung verstärkt als Heißgaserzeuger betrieben werden. Anschließend kann die Brennkraftmaschine wieder konventionell, d.h. optimiert auf die Erzeugung mechanischer Leistung, betrieben werden. Statt mit einem Gasverdichter, wie beim Abgasturbolader, kann eine als Heißgasentspannungsmaschine fungierende Abgasturbine auch an einen Elektrogenerator angekoppelt sein. Durch das frühe Öffnen des Auslaßventils wird noch relativ energie- bzw. enthalpiereiches, heißes und unter Druck stehendes Verbrennungsgas in den Abgasauslaßtrakt entspannt und vermag dort eine höhere Leistungsabgabe am nachgeschalteten Entspannungsprozeß zu bewirken. Im Anwendungsfall des Abgasturboladers ist es mit dieser Maßnahme insbesondere möglich, das bekanntermaßen gegenüber Saugmotoren schlechtere Instationärverhalten von Turbomotoren, d.h. das sogenannte Turboloch, weitgehend zu vermeiden, indem beim Übergang von Teillast- auf Vollastbetrieb die Brennkraftmaschine temporär in dieser Betriebsart mit frühem öffnen des Auslaßventils gefahren und dadurch eine Enthalpieerhöhung des Abgases vor der Abgasturbine erzeugt wird.

Im Diagramm von Fig. 3 ist eine Abgashalte-Betriebsart veranschaulicht, bei der die Viertakt-Brennkraftmaschine durch Einschieben zweier zusätzlicher Arbeitstakte zwecks Erhöhung der Aufenthaltsdauer des heißen Verbrennungsgases im Brennraum in einem Sechstaktbetrieb gefahren wird. Die ersten drei Arbeitstakte in Form einer Gasansaugphase Ic, einer Kompressionsphase IIc und einer Verbrennungs- und Expansionsphase IIIc entsprechen denjenigen des Normalbetriebs von Fig. 1. Daran anschließend bleibt nun jedoch in einem vierten Arbeitsakt IVc das Auslaßventil geschlossen, wodurch das im Brennraum befindliche warme Abgas nochmals in einer Kompressionsphase verdichtet wird. In einer anschließenden Expansionsphase Vc, die einen fünften Arbeitstakt bildet, wird das Abgas dann wieder entspannt. Ein anschließender sechster Arbeitstakt VIc bildet dann eine Gasausschiebephase mit geöffnetem Auslaßventil entsprechend dem vierten Arbeitstakt IVa des Normalbetriebs von Fig. 1. Statt das Auslaßventil erst für den sechsten Arbeitstakt zu öffnen, wird es schon um einen vorgebbaren Ausschiebevorverlagerungswert AV₁ vor Beginn der Gasausschiebephase VIc noch während der Expansionsphase Vc geöffnet, siehe die zugehörige gestrichelte Auslaßventil-Kennlinie A4. Das heiße, noch unter Druck stehende Verbrennungsgas setzt in diesem Fall wiederum seine Energie weniger in mechanische Kolbenarbeit als in Abgaswärme um, was zur schnelleren Erwärmung der Brennkraftmaschine und/oder einer nachgeschalteten Abgasreinigungsanlage genutzt werden kann.

Insgesamt wird durch das Einschieben der zwei zusätzlichen Kompressions- und Expansionsphasen IVc, Vc erreicht, daß sich das noch heiße Abgas etwa dreimal länger im Brennraum aufhält als im Normalbetrieb von Fig. 1, so daß entsprechend mehr Zeit zum Wärmeübergang vom Abgas in die Brennraumwände zur Verfügung steht, was wiederum zur schnelleren Erwärmung der Brennkraftmaschine und/oder zur vermehrten Wärmebereitstellung für eine Fahrzeugheizung genutzt werden kann.

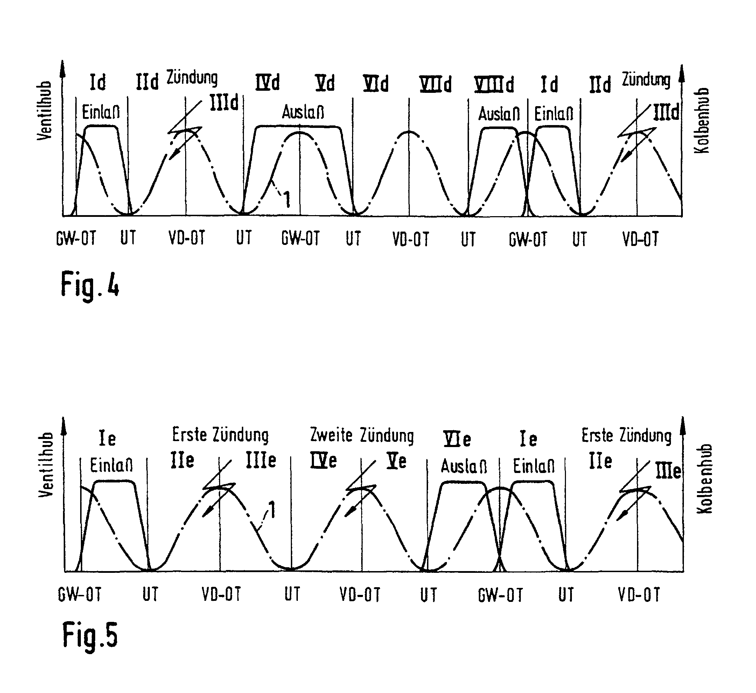

Das Diagramm von Fig. 4 veranschaulicht eine Abgasfüllungs-Betriebsart, bei der zeitweise unter daraus resultierender Verdopplung der Taktzahl pro Arbeitsspiel der Brennraum statt wenigstens teilweise mit Frischluft ausschließlich mit Abgas gefüllt wird. Hierzu entsprechen zunächst die ersten drei Arbeitstakte in Form einer Gasansaugphase Id, einer Kompressionsphase IId und einer Verbrennungs- und Expansionsphase IIId denjenigen des Normalbetriebs von Fig. 1. Auch eine anschließende Gasausschiebephase IVd als viertem Arbeitstakt entspricht derjenigen des Normalbetriebs mit der Ausnahme, daß am Ende dieser Gasausschiebephase IVd das Auslaßventil nicht geschlossen wird, sondern noch bis zum Ende einer anschließenden Gasansaugphase als einem fünftem Arbeitstakt Vd offen gehalten wird, wobei im Gegensatz zum Normalbetrieb das Einlaßventil während dieser Gasansaugphase Vd geschlossen bleibt. Auf diese Weise wird bei dieser Gasansaugphase Vd ausschließlich Abgas in den Brennraum gesaugt. Zwei anschließende Arbeitstakte VId, VIId bilden eine Kompressionsphase und eine Expansionsphase, in denen das zurückgesaugte Abgas verdichtet und wieder entspannt wird. Die dazu erforderliche Energie muß anderweitig aufgebracht werden, beispielsweise dadurch, daß gleichzeitig andere Motorzylinder mit erhöhter Last betrieben werden. In diesem Fall steigt zusätzlich der Effekt des Wärmeübergangs in die Brennraumwand für die mit der erhöhten Last zu betreibenden Zylinder an. Die beim Verdichten des Abgases entstehende Kompressionsenergie kann besonders in der Warmlaufphase zu einem Teil als Wärme in die noch kalte Brennraumwand fließen, zum anderen Teil wird sie in Gasdruck umgesetzt. Ein achter Arbeitstakt VIIId bildet schließlich eine Gasausschiebephase entsprechend dem vierten Arbeitstakt IVa des Normalbetriebs von Fig. 1. Auch hier kann bei Bedarf eine verfrühte Öffnung des Auslaßventils vor Ende der vorangegangenen Expansionsphase VIId vorgesehen werden, um den Gasdruck in erhöhte Abgaswärme statt in mechanische Kolbenarbeit umzusetzen.

Das Diagramm von Fig. 5 veranschaulicht ein Beispiel einer Zusatztakt-Betriebsart, bei welchem der Verbrennungsvorgang innerhalb eines Arbeitsspiels auf mehrere Verbrennungs- und Expansionsphasen aufgeteilt wird, wofür das Arbeitsspiel entsprechende zusätzliche Arbeitstakte beinhaltet. Durch alleinige Änderung der Gaswechselsteuerzeiten und der Kraftstoffeinspritzung kann damit zum Beispiel eine für das Viertaktprinzip konzipierte Brennkraftmaschine auf einen Mehrtaktbetrieb mit mehr als vier Takten pro Arbeitsspiel umgestellt werden, ohne daß dazu mechanische Eingriffe erforderlich sind. Die Umstellung muß lediglich im Motorsteuergerät abgelegt sein, z.B. in Software als entsprechender Programmcode. Dies gilt im übrigen auch für die anderen erfindungsgemäßen Betriebsarten.

Beim Beispiel von Fig. 5 wird eine Viertakt-Brennkraftmaschine im Sechstaktbetrieb mit einer ersten Verbrennung im dritten und einer zweiten Verbrennung im fünften Arbeitstakt ohne zwischenzeitlichen Gaswechselvorgang betrieben. Die ersten drei Arbeitstakte in Form einer Gasansaugphase Ie, einer Kompressionsphase IIe sowie einer Verbrennungs- und Expansionsphase IIIe entsprechen denjenigen des Normalbetriebs von Fig. 1. Die Verbrennung im dritten Arbeitstakt IIIe erfolgt hierbei mit Luftüberschuß. Anschließend wird nicht wie üblich das Auslaßventil geöffnet, sondern Auslaß- und Einlaßventil werden geschlossen gehalten, so daß der anschließende vierte Arbeitstakt IVe eine Kompressionsphase bildet, in der das im Brennraum befindliche Luft/Abgas-Gemisch nochmals verdichtet wird. Gegen Ende dieser Kompressionsphase IVe bzw. zu Beginn der anschließenden, einen fünften Arbeitstakt Ve bildenden Verbrennungs- und Expansionsphase erfolgt eine zweite Zugabe von Kraftstoff, wonach dann der Verbrennungs- und Entspannungsprozeß erfolgt. Ein anschließender sechster Arbeitstakt VIe bildet eine Gasausschiebephase entsprechend dem vierten Arbeitstakt des Normalbetriebs von Fig. 1 und schließt das Sechstakt-Arbeitsspiel ab.

Mit dem geschilderten Sechstaktbetrieb kann typischerweise im Teillastbereich bis ca. zwei Drittel der Vollast des Viertaktbetriebs gefahren werden. Der Verbrennungsvorgang mit einer einmal zugeführten Frischluftmenge kann in dieser Betriebsart als Vorverbrennung im dritten Arbeitstakt IIIe und als Hauptverbrennung im fünften Arbeitstakt Ve durchgeführt werden, mit dem Vorteil, daß für die einzelnen Verbrennungsphasen mehr Zeit zur Verfügung steht und somit eine bessere, homogenere Gemischaufbereitung möglich wird, was die Luft- und Kraftstoffausnutzung fördert.

Alternativ kann die Zusatztakt-Betriebsart so ausgelegt werden, daß im Teillastbereich im dritten Arbeitstakt IIIe eine Vor- und Hauptverbrennung und im vierten und/oder fünften Arbeitstakt IVe, Ve eine Abgasnachbehandlung durchgeführt werden. Letzteres kann in Form einer Nachverbrennung durch weitere Kraftstoffzufuhr oder in Form einer Schadstoffumwandlung z.B. durch Zugabe von Reduktionsmitteln geschehen, die zur Stickoxidumwandlung dienen.

Eine weitere Alternative besteht darin, nur einen gewissen Teil des im Brennraum enthaltenen Gemischs im vierten und fünften Arbeitstakt IVe, Ve innermotorisch zu behandeln, den übrigen Teil hingegen beispielsweise durch kurzes Öffnen des Auslaßventils zu Beginn des vierten Arbeitstaktes IVe ausströmen zu lassen, um damit eine nachmotorische Reaktion durchzuführen.

Als weitere Alternative kann die zweite Phase des Verbrennungsprozesses, z.B. im fünften Arbeitstakt Ve, so gestaltet werden, daß nur ein Teil der eingespritzten Kraftstoffmenge verbrennt und der restliche Teil als überschüssige Menge in aufbereiteter Form unverbrannt bleibt und mit dem Rohabgas ausgespült wird, um im Abgas zwecks Abgasnachbehandlung eines gewünschte Menge unverbrannter Kohlenwasserstoffe bereitzustellen, die z.B. zur nachmotorischen Stickoxidminderung beitragen können. Ergänzend läßt sich durch die zweite Verbrennungsphase bei guter Homogeniesierung ein weitgehend innermotorischer Verbrauch des Luftsauerstoffs erreichen, so daß z.B. der für die Regeneration von Stickoxid-Adsorberkatalysatoren zyklisch erforderliche, kurzzeitige Fettbetrieb mit überschüssigem Kraftstoff auf einfache Weise bewerkstelligt werden kann. Bei allen genannten Alternativen kann zwischen je zwei der genannten innermotorischen Prozesse ganz auf Gaswechselvorgänge verzichtet oder alternativ ein teilweiser Gaswechsel zur Abgabe von Gas aus dem Brennraum oder Zufuhr von Gas in den Brennraum zugelassen werden.

Die Aufteilung des Verbrennungsvorgangs auf mehrere Arbeitstakte ist insbesondere für Brennkraftmaschinen mit Direkteinspritzung geeignet, bei der die Zeitpunkte und Mengen der Kraftstoffzudosierung zumindest innerhalb gewisser Grenzen frei wählbar sind. Wie gesagt, können der eigentlichen Verbrennung ein oder mehrere weitere innermotorische Prozesse nachfolgen und/oder vorausgehen. Zwischen diesen Prozessen kann ganz auf Gaswechselvorgänge verzichtet werden, Alternativ kann ein teilweises Ausschieben von Abgas aus dem Brennraum und/oder teilweises Zuführen von Frischluft in den Brennraum erfolgen.

Es versteht sich, daß die oben beschriebenen Betriebsarten brennraum- und arbeitsspielindividuell auf den oder die Brennräume der Brennkraftmaschine und deren aufeinanderfolgende Arbeitsspiele verteilt werden können, d.h. für jedes Arbeitsspiel jedes Brennraums kann durch Einstellung der entsprechenden Gaswechselsteuerzeiten sowie ggf. der Kraftstoffeinspritzung und der Zündung die Betriebsart individuell festgelegt werden. So können z.B. die besonders wärmeliefernden Arbeitsspiele je nach Erfordernis in den einzelnen Zylindern mehr oder weniger häufig durchgeführt werden. Die Verteilung der Arbeitsspiele einer jeweiligen Betriebsart kann insbesondere nach festen Mustern oder rollierend erfolgen. Beispielsweise können alle Zylinder der Brennkraftmaschine synchron für einen Teil der Arbeitsspiele im Normalbetrieb gemäß Fig. 1 und im übrigen in einer der anderen Betriebsarten gemäß den Fig. 2 bis 5 gefahren werden, oder es können manche Zylinder im Normalbetrieb gemäß Fig. 1 und die anderen Zylinder nach einer der anderen Betriebsarten gemäß den Fig. 2 bis 5 bzw. anderen erfindungsgemäßen Verfahrensvarianten betrieben werden. Das erfindungsgemäße Betriebsverfahren eignet sich sowohl für Otto- wie auch für Dieselmotoren.

Die erfindungsgemäße Betriebsweise mit variablen Gaswechselsteuerzeiten kann selbstverständlich mit anderen vorteilhaften, herkömmlichen Eingriffen in den Motorbetrieb kombiniert werden, wie frühe oder späte Lage des Verbrennungsschwerpunktes oder Durchführen mehrerer einzelner oder von langanhaltenden Verbrennungsvorgängen innerhalb eines Arbeitstaktes z.B. durch Mehrfach-Kraftstoffzumessung während eines solchen Arbeitstaktes. Die Betriebsarten mit spätem Schließen des Auslaßventils, insbesondere bei Verzicht auf ein frühes Öffnen desselben, und der Abgasrückhaltung können auch bei betriebswarmer Brennkraftmaschine vorteilhaft zur verbrauchsgünstigen Lastregelung im unteren Lastbereich eingesetzt werden.

## Patentansprüche

1. Verfahren zum Betrieb einer Brennkraftmaschine mit variablen Gaswechselsteuerzeiten wahlweise in einer von wenigstens zwei unterschiedlichen Betriebsarten, die zu einer Gruppe gehören, die aus einer Normalbetriebsart und weiteren Betriebsarten besteht,
**dadurch gekennzeichnet, dass**
die weiteren Betriebsarten eine Abgashalte-Betriebsart, eine Abgasfüllungs-Betriebsart und eine Zusatztakt-Betriebsart mit folgenden Eigenschaften sind:
- in der Abgashalte-Betriebsart werden bei wenigstens einem Brennraum für wenigstens einen Teil der aufeinanderfolgenden Arbeitsspiele nach einer Verbrennungs- und Expansionsphase (IIIc) eine Kompressions- und eine Expansionsphase (IVc, Vc) eingeschoben, wobei das Auslassventil in der Kompressionsphase (IVc) geschlossen gehalten und schon im Verlauf der anschließenden Expansionsphase (Vc) um einen vorgebbaren Ausschiebevorverlagerungswert (AV₁) vor Beginn einer darauf folgenden Gasausschiebephase (VIc) und dementsprechend früher als für die Gasausschiebung bei der Normalbetriebsart geöffnet wird,
- in der Abgasfüllungs-Betriebsart werden bei wenigstens einem Brennraum für wenigstens einen Teil der aufeinanderfolgenden Arbeitsspiele während einer Gasansaugphase (Vd) das Einlassventil geschlossen und das Auslassventil geöffnet gehalten und anschließend eine Kompressions- und eine Expansionsphase (VId, VIId) eingeschoben, wobei das Auslassventil in der Kompressionsphase (VId) geschlossen gehalten und schon im Verlauf der anschließenden Expansionsphase (VIId) oder zu Beginn einer darauf folgenden Gasausschiebephase (VIIId) geöffnet wird, und
- in der Zusatztakt-Betriebsart werden bei wenigstens einem Brennraum für wenigstens einen Teil der aufeinanderfolgenden Arbeitsspiele zwei Kompressions- und Expansionsphasen (IIe, IIIe; IVe, Ve) pro Arbeitsspiel durchgeführt, von denen die erste Kompressions- und Expansionsphase (IIe, IIIe) einen Kraftstoffverbrennungsvorgang und die zweite Kompressionsund Expansionsphase (IVe, Ve) einen Kraftstoffverbrennungsvorgang mit erneuter Kraftstoffzugabe oder eine Abgasreinigungsmaßnahme mit Reduktionsmittelzugabe beinhalten.

2. Verfahren nach Anspruch 1, weiter
**dadurch gekennzeichnet, dass**
als weitere wahlweise Betriebsart eine Abgasdirektrückführungs-Betriebsart vorgesehen ist, in der bei wenigstens einem Brennraum für wenigstens einen Teil der aufeinanderfolgenden Arbeitsspiele das Auslassventil um einen vorgebbaren Rücksaugverzögerungswert (RV) verspätet erst während einer an eine Gasausschiebephase (IVb) anschließenden Gasansaugphase (Ib) geschlossen wird.

3. Verfahren nach Anspruch 2, weiter
**dadurch gekennzeichnet, dass**
in der Abgasdirektrückführungs-Betriebsart das Einlassventil während der Gasansaugphase (Ib) erst um etwa den Rücksaugverzögerungswert (RV) verspätet geöffnet wird.

4. Verfahren nach Anspruch 2 oder 3, weiter
**dadurch gekennzeichnet, dass**
in der Abgasdirektrückführungs-Betriebsart das Auslassventil um einen vorgebbaren Ausschiebevorverlagerungswert (AV) vor Beginn der Gasausschiebephase (Ivb) schon während einer vorhergehenden Verbrennungs- und Expansionsphase (IIIb) verfrüht geöffnet wird.

## Claims

1. Method for the operation of an internal combustion engine with variable gas exchange timing control in one of at least two different modes of operation according to choice, the said modes belonging to a group that consists of a normal mode of operation and further operation modes,
**characterised in that**
the further operation modes are an exhaust gas retention mode, an exhaust gas filling mode and an additional-stroke mode having the following properties:
- in the exhaust gas retention mode, in at least one combustion chamber and for at least part of the successive working cycles, after a combustion and expansion phase (IIIc) a compression and an expansion phase (IVc, Vc) are inserted, in which the exhaust valve is kept closed during the compression phase (IVc) and, during the course of the subsequent expansion phase (Vc), it is opened a specifiable exhaust advance value (AV₁) before the beginning of a subsequent gas expulsion phase (VIc) and, correspondingly, earlier than for the gas expulsion during the normal operating mode,
- in the exhaust gas filling mode, in at least one combustion chamber and for at least part of the successive working cycles, the intake valve is closed and the exhaust valve kept open during a gas intake phase (Vd), and then a compression and an expansion phase (VId, VIId) are inserted, in which the exhaust valve is kept closed during the compression phase (VId) and is opened during the course of the subsequent expansion phase (VIId) or at the beginning of a subsequent gas expulsion phase (VIIId), and
- in the additional-stroke mode, in at least one combustion chamber and for at least part of the successive working cycles, two compression and expansion phases (IIe, IIIe; IVe, Ve) per working cycle are carried out, of which the first compression and expansion phase (IIe, IIIe) includes a fuel combustion process and the second compression and expansion phase (IVe, Ve) includes a fuel combustion process with renewed fuel intake or an exhaust gas purification measure with addition of a reducing medium.

2. Method according to Claim 1, further
**characterised in that**
as a further optional operating mode a direct exhaust gas return mode is provided, in which, in at least one combustion chamber and for at least part of the successive working cycles, the closure of the exhaust valve is retarded by a specifiable resuction delay value (RV) until a gas intake phase (Ib) that follows a gas expulsion phase (IVb).

3. Method according to Claim 2, further
**characterised in that**
in the direct exhaust gas return operating mode the opening of the intake valve during the gas intake phase (Ib) is retarded by approximately the resuction delay value (RV).

4. Method according to Claims 2 or 3, further
**characterised in that**
in the direct exhaust gas return operating mode the opening of the exhaust valve is advanced by a specifiable exhaust advance value (AV) before the beginning of the gas expulsion phase (IVb) and during a previous combustion and expansion phase (IIIb).

## Revendications

1. Procédé pour faire fonctionner un moteur à combustion interne à temps de commande variables d'échange des gaz au choix dans l'un au moins de deux modes de fonctionnement différents qui font partie d'un groupe constitué par un mode de fonctionnement normal et par d'autres modes de fonctionnement,
**caractérisé en ce que** les autres modes de fonctionnement sont un mode de fonctionnement de maintien de gaz d'échappement, un mode de fonctionnement de remplissage de gaz d'échappement et un mode de fonctionnement à temps supplémentaire, présentant les caractéristiques suivantes :
- dans le mode de fonctionnement de maintien de gaz d'échappement, dans au moins une chambre de combustion et pour une partie au moins des cycles de travail successifs, une phase de compression et une phase d'expansion (IVc, Vc) sont ajoutées après une phase de combustion et d'expansion (IIIc), la soupape d'échappement étant maintenue fermée dans la phase de compression (IVc) et étant ouverte, déjà au cours de la phase d'expansion suivante (Vc), d'une valeur d'expulsion anticipée prédéterminée (AV₁) avant le début d'une phase d'expulsion de gaz suivante (VIc) et d'autant plus tôt que pour l'expulsion de gaz dans le mode de fonctionnement normal,
- dans le mode de fonctionnement de remplissage de gaz d'échappement, dans au moins une chambre de combustion et pour une partie au moins des cycles de travail successifs, pendant une phase d'aspiration de gaz (Vd) la soupape d'admission est maintenue fermée et la soupape d'échappement est maintenue ouverte et ensuite une phase de compression et une phase d'expansion (VId, VIId) sont ajoutées, la soupape d'échappement étant maintenue fermée dans la phase de compression (VId) et étant ouverte, déjà au cours de la phase d'expansion suivante (VIId) ou au début d'une phase d'expulsion de gaz suivante (VTIId), et
- dans le mode de fonctionnement à temps supplémentaire, dans au moins une chambre de combustion et pour une partie au moins des cycles de travail successifs, deux phases de compression et d'expansion (IIe, IIIe ; IVe, Ve) sont exécutées par cycle de travail, dont la première phase de compression et d'expansion (IIe, IIIe) comprend une opération de combustion de carburant et la deuxième phase de compression et d'expansion (IVe, Ve) comprend une opération de combustion de carburant avec une nouvelle addition de carburant ou une opération de purification de gaz d'échappement avec addition d'agents de réduction.

2. Procédé selon la revendication 1, **caractérisé en ce qu'**il est prévu à titre d'autre mode de fonctionnement optionnel un mode de fonctionnement de recirculation directe de gaz d'échappement, pendant lequel, dans au moins une chambre de combustion et pour une partie au moins des cycles de travail successifs, la soupape d'échappement est fermée de façon retardée d'une valeur de retard de ré-aspiration déterminée (RV) uniquement pendant une phase d'aspiration de gaz (Ib) qui suit une phase d'expulsion de gaz (IVb).

3. Procédé selon la revendication 2, **caractérisé en ce que** dans le mode de fonctionnement de recirculation directe de gaz d'échappement, la soupape d'admission est ouverte uniquement de façon retardée approximativement de la valeur de retard de ré-aspiration (RV) pendant la phase d'aspiration de gaz (Ib).

4. Procédé selon l'une ou l'autre des revendications 2 et 3, **caractérisé en ce** dans le mode de fonctionnement de recirculation directe de gaz d'échappement, la soupape d'échappement est ouverte de façon précoce d'une valeur anticipée d'expulsion prédéterminée (AV) avant le début de la phase d'expulsion de gaz (IVb) déjà pendant une phase de combustion et d'expansion précédente (IIIb).
